# EUROPÄISCHE PATENTSCHRIFT

(11) **EP 0 460 481 B1**
(45) Veröffentlichungstag und Bekanntmachung des Hinweises auf die Patenterteilung: **02.04.1997**
(21) Anmeldenummer: 91108518.1
(22) Anmeldetag: 25.05.1991
(51) Int. Cl.: C08G 18/02, C08G 18/79

(54) **Verfahren zur Stabilisierung von Estergruppen enthaltenden Kunststoffen**
Process for the stabilisation of resins containing ester groups
Procédé de stabilisation de résines contenant des groupes ester

(30) Priorität: 07.06.1990 DE 4018184
(43) Veröffentlichungstag der Anmeldung: 11.12.1991
(73) Patentinhaber: BAYER AG, 51368 Leverkusen (DE)
(72) Erfinder: Quiring, Bernd, Dr., W-5090 Leverkusen 1 (DE); Münzmay, Thomas, Dr., W-4047 Dormagen (DE); Henning, Wolfgang, Dr., W-5067 Kuerten (DE); Mayer, Eduard, Dr., W-4047 Dormagen (DE); Meckel, Walter, Dr., W-4040 Neuss (DE); Goyert, Wilhelm, Dr., W-5090 Leverkusen 1 (DE)

(56) Entgegenhaltungen:
- EP-A- 197 789
- EP-A- 0 005 230
- DE-C- 1 145 353
- FR-A- 2 311 806
- ANGEWANDTE CHEMIE, Bd. 74, Nr. 21, 7. November 1962, WEINHEIM DE Seiten 801 - 806; W. NEUMANN ET AL.: "CARBODIIMIDE AUS ISOCYANATEN"

## Beschreibung

Die vorliegende Erfindung betrifft ein Verfahren zur Stabilisierung von Estergruppen enthaltenden Kunststoffen gegen Abbau durch Hitze und/oder Hydrolyse durch Einbau von sterisch gehinderten Carbodiimiden mit Isocyanatendgruppen. Die beanspruchten einbaufähigen Carbodiimide zeigen eine hervorragende Alterungsschutzwirkung und spalten selbst bei sehr hohen Temperaturen keine flüchtigen Produkte ab.

Die Verwendung von Carbodiimiden mit insbesondere sterisch gehinderten Carbodiimidgruppen als Alterungsinsbesondere Hydrolysenschutzmittel für Polyesterpolyurethane ist bekannt DE-OS 25 43 920. Diese werden in der Regel durch Kondensation aus Monoisocyanaten oder aus einer Mischung aus Mono- und Polyisocyanaten erhalten und sind z.B. als Stabaxol-Produkte (Lieferant Rheinchemie) im Handel. Ihre Hydrolyseschutzwirkung wird der Reaktion mit freien Carboxylgruppen (z.B. aus der Adipinsäure des Polyesters) zu Acylharnstoffen zugeschrieben ¹⁾, Unter bestimmten Voraussetzungen, z.B. bei unsachgemäßer Verarbeitung von Polyurethanen, die mit derartigen Carbodiimiden stabilisiert wurden, werden Produkte freigesetzt, die zu einer Belästigung der Verarbeiter oder Benutzer führen können.
¹⁾ S.z.B.: W. Neumann und P. Fischer, Angewandte Chemie 74 (1962), S. 801 ff

Es ist Stand der Technik, Oligo- und Polycarbodiimide als Stabilisatoren z.B. für Terephthalatfasern einzusetzen.

Darüber hinaus sind Carbodiimide und Folgeprodukte, die z.B. noch freie Isocyanatgruppen enthalten können, als Modifikatoren für Polyisocyanate und Polyurethanschäume bekannt. Der Zusatz wird im allgemeinen zur Erzielung bestimmter physikalischer Eigenschaften, wie z.B. einer Schmelzpunktserniedrigung, gewählt (s. z.B. DAS 28 37 770, USP 40 67 820, DOS 27 14 292, DOS 27 14 293).

### Detaillierte Beschreibung der Erfindung

Die Aufgabe bestand darin, Alterungsschutz-, insbesondere Hydrolysenschutzmittel für Estergruppen enthaltende Kunststoffe zu finden, die bei hoher Wirksamkeit weder unter Verarbeitungs- noch unter Gebrauchsbedingungen flüchtige, gegebenenfalls belästigende Substanzen abspalten.

Gegenstand der vorliegenden Erfindung ist die Stabilisierung von Polyester enthaltenden Kunststoffen wie z.B. Polyterephthalaten, Polyetherestern, Polyesteramiden, Estergruppen enthaltenden Polyetherpolyamiden, Polycaprolactonen und Polyurethanen (darunter werden auch Polyesterurethanharnstoffe und Polyesterpolyharnstoffe verstanden) wegen Wärme- und/oder hydrolytischen Abbau mit einbaufähigen, sterisch gehinderten Carbodiimiden der allgemeinen Formel 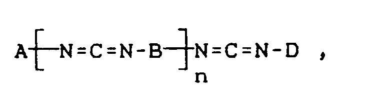 in der A, B und D aromatische oder araliphatische Kohlenwasserstoffreste mit 6 bis 20 C-Atomen bedeuten, die in mindestens einer Orthostellung zur Carbodiimidgruppe aromatische, aliphatische und/oder cycloaliphatische Substituenten mit mindestens 2 C-Atomen, bevorzugt verzweigte oder cyclische aliphatische Reste mit mindestens 3 C-Atomen tragen, und die Carbodiimidgruppe(n) an aromatischen Kohlenstoff gebunden ist (sind), dadurch gekennzeichnet, daß n = 0-3 (im Mittel), bevorzugt im Mittel = 0 ist und A und D gleich oder verschieden und durch mindestens eine NCO-Gruppe substituiert sind.

Die erfindungsgemäßen, NCO-Gruppen enthaltenden Carbodiimide zeichnen sich durch eine besonders hohe Hydrolysenschutzwirkung aus, und die mit diesen Produkten stabilisierten Polyesterprodukte spalten auch bei Temperaturen über 200°C, d.h. unter normalen arbeitungsbedingungen keine flüchtigen, aus den erfindungsgemäß zu verwendenden Stabilisierungsmittel stammenden Komponenten ab. Die erfindungsgemäß zu verwendenden isocyanatgruppenhaltigen Carbodiimide der allgemeinen Formel 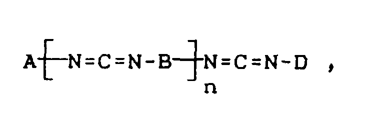 in der A, B, D und n die genannten Bedeutungen haben, können nach an sich bekannten Verfahren hergestellt werden. Ein mögliches Herstellungsverfahren ist z.B. in der DE-AS 25 37 685 beschrieben. Nach der Lehre dieser Patentschrift werden organische Polyisocyanate in Gegenwart einer geeigneten Phosphorverbindung bis zum gewünschten Grad teilweise umgesetzt und der Katalysator anschließend mit einem geeigneten Halogenid, z.B. einem Säurehalogenid, desaktiviert.

Erfindungsgemäß als Alterungsschutzmittel geeignet sind alle Isocyanatgruppen enthaltenden aromatischen Mono- und Oligocarbodiimide der allgemeinen Formel 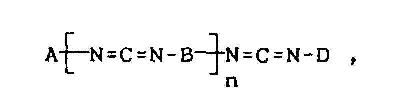 in der A, B, D und n die genannten Bedeutungen haben. Bevorzugt sind Verbindungen, deren aromatische Reste A, D und B in beiden Orthostellungen zur Carbodiimidgruppe durch (cyclo-)aliphatische und/oder aromatische Reste substituiert sind, wobei einer dieser orthoständigen Substituenten eine Methylgruppe sein kann und n = 0 oder 1 ist. Besonders bevorzugt sind Verbindungen, deren aromatische Ringe A, D und B in beiden Nachbarstellungen zur Carbodiimidgruppe durch (cyclo)-aliphatische Reste substituiert sind, wobei einer dieser orthoständigen Substituenten eine Methylgruppe sein kann, der andere mindestens 2 C-Atome enthält und n im Mittel etwa = 0 ist.

Ganz besonders bevorzugt sind etwa 2 Isocyanatgruppen enthaltende Carbodiimide, die in Nachbarstellung zur Carbodiimidgruppe 2 Substituenten tragen, von denen mindestens einer eine verzweigte aliphatische Kette mit mindestens 3 C-Atomen oder ein Cycloaliphat mit mindestens 5 C-Atomen ist und n im Mittel etwa 0 ist.

Erfindungsgemäß zu verwendende Isocyanatgruppen enthaltende Carbodiimide können z.B. nach dem genannten Verfahren aus einem oder mehreren Diisocyanaten auf der Basis von substituiertem Benzol, Diphenylmethan, Naphthalin hergestellt werden. Erfindungsgemäß geeignete zur Carbodiimidgruppe benachbarte Substituenten am aromatischen Ring sind C₂-C₂₀ Alkyl- und/oder Cycloalkylgruppen, wie Ethyl-, Propyl-, Isopropyl-, sek.-Butyl-, tert.-Butyl-, Cyclohexyl-, Dodecyl-, aber auch Aryl- und Aralkylreste mit 6 bis 15 C-Atomen, wie Phenyl-, Tolyl-, Benzyl-, Naphthylreste usw. Diese Substituenten können auch mit Isocyanat- und zerewitinoffaktiven Gruppen unter normalen Bedingungen nicht reagierende Substituenten, wie z.B. Halogen, Ethergruppen, Estergruppen usw., tragen. Besonders bevorzugte Diisocyanate sind 2,6-Diethyl-1,3-diisocyanato-4-methylbenzol und 4,6-Diethyl-1,3-diisocyanato-2-methylbenzol und deren merengemische, 2,4-Diisocyanato-1,3,5-tri-(1-methylethyl)-benzol, 4,4'-Diisocyanato-3,3',5,5'-tetraethyldiphenylmethan und -3,3',5,5'-tetraisopropyldiphenylmethan.

Die erfindungsgemäß zu stabilisierenden Estergruppen enthaltenden Kunststoffe sind solche der an sich bekannten Art, die für Klebstoffe, Beschichtungsmittel, Fasern, Artikeln aus gegebenenfalls zelligen Gießelastomeren und thermoplastische Verarbeitung verwendet werden.

Voraussetzung für die Wirksamkeit der erfindungsgemäß zu verwendenden Isocyanatgruppen enthaltenden Carbodiimide ist die Möglichkeit, daß sich beim Abbau der Polymeren durch Hitze und/oder Hydrolyse Carbonsäuren bilden können.

Die erfindungsgemäß stabilisierten Polyesterkunststoffe spalten praktisch weder in der Hitze, z.B. unter normalen Verarbeitungsbedingungen, noch bei Raumtemperatur giftige, flüchtige, aus den erfindungsgemäß zu verwendenden Stabilisierungsmitteln stammende Substanzen ab.

Natürlich zersetzen sie sich auch bei sehr hohen, in der normalen Verarbeitungspraxis nicht vorkommenden Temperaturen.

Die in Frage kommenden Ester (Polyester), die Hauptbestandteil oder wesentliche Komponente von Kunststoffen sind, sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, araliphatischer, aromatischer und/oder heterocyclischer Natur sein und gegebenenfalls, z.B. durch Halogenatome, substituiert und/oder ungesättigt sein. Als Beispiele für solche Carbonsäuren und deren Derivate seien genannt:

Bernsteinsäure, Adipinsäure, Korksäure, Azelainsäure, Sebacinsäure, Dodecandisäure, Phthalsäure, Isophthalsäure, Trimellitsäure, Phthalsäureanhydrid, phthalsäureanhydrid, Hexahydrophthalsäureanhydrid, Tetrachlorphthalsäureanhydrid, Endomethylentetrahydrophthalsäureanhydrid, Glutarsäureanhydrid, Glutarsäureanhydrid, Fumarsäure, dimerisierte und trimerisierte ungesättigte Fettsäuren, gegebenenfalls in Mischung mit monomeren ungesättigten Fettsäuren, wie Ölsäure; phthalsäuredimethylester und Terephthalsäure-bisglykolester. Als mehrwertige Alkohole kommen z.B. Ethylenglykol, Propylenglykol-(1,2) und -(1,3), Butylenglykol-(1,4), -(1,3) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole mit Molgewichten bis ca. 10 000 in Frage. Die Polyester können anteilig endständige Carboxylgruppen aufweisen. Auch Polyester aus Lactonen, z.B. ε-Caprolacton, oder aus Hydroxycarbonsäuren, z.B. ε-Hydroxycapronsäure, sind einsetzbar.

Als "Polyester" kommen auch Polyesteramide und gegebenenfalls Polyamide in Frage, z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen sowie deren Mischungen mit den genannten Polyalkoholen gewonnenen, vorwiegend linearen Kondensate. Auch bereits Urethan- oder Harnstoffgruppen enthaltende Polyesterverbindungen sowie gegebenenfalls modifizierte natürliche Polyester, wie Rizinusöl, sind unter dem Begriff "Polyester" erfindungsgemäß zu verstehen.

Die erfindungsgemäß zu stabilisierenden Polyesterurethane sind solche der an sich bekannten Art. Sie sind aufgebaut aus den beschriebenen Polyestern mit schnittsmolekulargewicht von 500 bis 10 000, gegebenenfalls anderen höhermolekularen Polyolen und/oder -aminen, wie Polyethern, Polycarbonaten, Polybutadiendi- oder polyol(amin) mit im Mittel 1,5-5, bevorzugt ca. 2-3 zerewitinoffaktiven Gruppen im Molekül, aromatischen, araliphatischen, aliphatischen und/oder cycloaliphatischen Polyisocyanaten mit im Mittel ca. 1,5-5, bevorzugt ca. 2-3, besonders bevorzugt ca. 2 Isocyanatgruppen im Molekül und gegebenenfalls kurzkettigen Kettenverlängerern wie Di- und/oder Polyole und/oder -amine sowie Aminoalkohole.

Die genannten Polyhydroxylverbindungen können vor ihrer Verwendung im Polyisocyanat-Polyadditionsverfahren noch in der verschiedensten Weise modifiziert werden: So läßt sich gemäß DE-OS 2 210 839 (USP 3 849 515) und 2 544 195 ein Gemisch aus verschiedenen Polyhydroxylverbindungen (z.B. aus einem oder mehreren Polyesterpolyolen) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z.B. gemäß DE-OS 2 559 372 in die Polyhydroxylverbindungen Amidgruppen oder gemäß DE-OS 2 620 487 durch Umsetzung mit polyfunktionellen Cyansäureestern Triazingruppen einzuführen. Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-OS 2 019 432 und 2 619 840 bzw. den USP 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-OS 2 546 536 bzw. USP 3 865 791 höhermolekulare, endständige Aminogruppen aufweisende Verbindungen. Weitere Herstellungsverfahren für höhermolekulare, Estergruppen enthaltende Verbindungen mit endständigen Aminogruppen oder Hydrazidgruppen werden z.B. in der DE-OS 1 694 152 (USP 3 625 871) beschrieben.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den obengenannten Polyestern ablaufen läßt. Derartige Verfahren sind beispielsweise in den DE-AS 1 168 075 und 1 260 142, sowie den DE-OS 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß USP 3 869 413 bzw. DE-OS 2 550 860 eine fertige wäßrige Polymerdispersion mit einer Polyhydroxylverbindung zu vermischen und anschließend aus dem Gemisch das Wasser zu entfernen. Voraussetzung für die Wirksamkeit der erfindungsgemäß zu verwendenden, Isocyanatgruppen enthaltenden Carbodiimide ist die Möglichkeit, daß sich beim Abbau der Polyurethane durch Hitze oder Hydrolyse Carbonsäuren bilden können.

Als erfindungsgemäß zu stabilisierende Kunststoffe kommen ferner Polyterephthalate in Frage, die z.B. aus Terephthalsäuredimethylester usw. und Butandiol und/oder Ethandiol aufgebaut sind, die aber auch noch andere Komponenten wie Diole und/oder Dicarbonsäuren enthalten können und mittlere Molekulargewichte (mn) von mindestens 10 000 haben. Derartige Produkte werden als hochwertige Chemiewerkstoffe oder Fasern eingesetzt.

In elastizifizierter Form können sie auch größere Anteile eines längerkettigen Diols wie z.B. einen C₄-Polyether eingebaut enthalten. Derartige Produkte sind z.B. unter dem Handelsnamen Hytrel erhältlich.

Erfindungsgemäß zu stabilisierende Produkte sind auch die im Handel befindlichen Polyesterblöcke enthaltenden Polyamide und Estergruppen enthaltenden Polyetherpolyamide, grundsätzlich alle Estergruppen enthaltenden Kunststoffe, bevorzugt solche, die Estergruppen in der Hauptkette enthalten.

Die erfindungsgemäß stabilisierten Polyester enthaltenden Kunststoffe spalten praktisch weder in der Hitze, z.B. unter Verarbeitungsbedingungen, noch bei Raumtemperatur giftige, flüchtige, möglicherweise belästigende Substanzen ab und sind deshalb aus toxikologischen Gründen einer Stabilisierung nach dem Stand der Technik vorzuziehen. Überraschend ist, daß die erfindungsgemäß einzusetzenden Isocyanatgruppen enthaltenden Carbodiimide deutlich wirksamere Stabilisatoren als ihre carbodiimidgruppenhaltigen Reaktionsprodukte mit niedermolekularen Alkoholen, wie z.B. Butandiol oder Stearylalkohol, sind. Besonders überraschend ist die hohe Stabilisatorwirkung der isocyanatgruppenhaltigen Monocarbodiimide.

Die erfindungsgemäß stabilisierten Polyester enthaltenden Kunststoffe können auf verschiedene Weise hergestellt werden. So ist z.B. eine Einstufenreaktion, bei der alle Komponenten, gegebenenfalls auch Additive, gemischt und miteinander reagieren gelassen werden, möglich. Die Umsetzung kann auch in mehreren Stufen erfolgen. So ist z.B. auch die Einarbeitung des Isocyanatgruppen enthaltenden aromatischen Carbodiimids in die Schmelze, des ausreagierten Polymeren möglich. In einer bevorzugten Ausführungsform wird zunächst in einer ersten Stufe der hydroxylgruppenhaltige Polyester mit dem Isocyanatgruppen enthaltenden erfindungsgemäßen Carbodiimid umgesetzt und erst danach das Polymere hergestellt.

Die erfindungsgemäß stabilisierten Polymeren können Additive wie Wachs, Füllstoffe, z.B. auch Fasern, Pigmente, Farbstoffe, Flammschutzmittel, Verarbeitungshilfsmittel enthalten. Sie können auch mit anderen Kunststoffen gemischt sein, insbesondere dann, wenn bestimmte Eigenschaften erzielt werden sollen. Sie können aus Lösungsmittel, als Dispersion (Emulsion, Suspension) oder in Substanz ein- und mehrkomponentig verarbeitet werden, wobei auch Treibmittel verwendet werden kann.

Die Verfahrensprodukte haben ein hohes mechanisches Eigenschaftsniveau. Sie finden Verwendung für elastische Überzüge, z.B. für Textilien und Kunststoffe, die bevorzugt Elastomere ergeben, für Extrusions- und Spritzgußartikel, können z.B. auch als Pulver zu Überzügen gesintert werden, als Klebstoffe, als Gießharze, walzbare, sprühbare und gießbare PUR-Elastomere, insbesondere auch gegebenenfalls zellige Polyurethangießsysteme auf Basis von Naphthylen-1,5-diisocyanat, und Fasern. Die Verwendungsmöglichkeiten der Verfahrensprodukte sind an sich bekannt.

Die Beispiele sollen die Erfindung erläutern, stellen aber keine Begrenzung der Erfindung dar.

### Beispiele

### A) Allgemeine Arbeitsvorschrift zur Herstellung von carbodiimidgruppenhaltigen Diisocyanaten

In einem 1 l Rundkolben mit KPG-Rührer, Thermometer und Rückflußkühler werden ca. 300 bis 500 Gew.-Teile Diisocyanat vorgelegt. Das Reaktionsgefäß wird mit Stickstoff überlagert und auf 120°C erwärmt. Bei 120°C werden 0,1 Gew.-% Phospholinoxid a) als 25 %ige Lösung in N-Methylpyrrolidon in das Diisocyanat eingetragen. Der Fortgang der Reaktionwird durch Kontrolle des Isocyanatgehaltes beobachtet. Bei Erreichen des gewünschten cyanatgehaltes wird die Reaktion durch Abkühlen auf 60°C und Zugabe von 0,5 Gew.-% Phosphortrichlorid gestoppt und das resultierende Produkt auf Raumtemperatur abgekühlt.
a) Mischung aus: 1-Methyl-1-phospha-2-cyclopenten-1-oxid
1-Methyl-1-phospha-3-cyclopenten-1-oxid

**Tabelle 1**

| Beispiel | Diisocyanat | Isocyanatgehalt (%) |
|---|---|---|
| A1 | Toluylendiisocyanat (Desmodur T 80, BAYER AG) | 27,7 |
| A2 | TRIDI^{b)} | 16,0 |
| A3 | TRIDI^{b)} | 7,9 |
| A4 | TRIDI^{b)} | 21,7 |
| A5 | DETDI^{c)} | 8,7 |
| A6 | DETDI^{c)} | 18,6 |
| A7 | TRIDI^{b)} | 15,8 |
| A12 | 4,4'-Diisocyanato-3,3',5,5'-tetraisopropyl-diphenylmethan | 11,1 |

| | | |
|---|---|---|
| b) 2,4-Diisocyanato-1,3,5-tris-(1-methylethyl)-benzol | | |
| c) 70:30 Gemisch aus 2,6-Diethyl-1,3-diisocyanato-4-methylbenzol und 4,6-Diethyl-1,3-diisocyanato-2-methylbenzol | | |

### Beispiel A8

100 Gew.-Teile des nach Beispiel A1 hergestellten Diisocyanatocarbodiimids werden innerhalb von 30 Min. bei 90°C in 180 Gew.-Teile 1,4-Butandiol eingetragen. Nach weiteren 45 Min. bei 90°C ist die Reaktionsmischung isocyanatfrei. Das Produkt hat einen Hydroxylgruppengehalt von 20,2 %.

### Beispiel A9

264 Gew.-Teile des nach Beispiel A2 erhaltenen Diiso-cyanatocarbodiimids werden bei 120°C mit 284 Gew.-Teilen Stearylisocyanat unter Zusatz von 1 Gew.-Teil Phospholinoxid (siehe allgemeine Arbeitsvorschrift) umgesetzt. Nach 15 Stunden ist das Reaktionsgemisch isocyanatfrei.

### Beispiel A10

206 Gew.-Teile des nach Beispiel A6 hergestellten Diisocyanatocarbodiimids werden bei 70°C mit 245 Gew.-Teilen Stearylalkohol umgesetzt. Nach 3 Stunden ist das Produkt isocyanatfrei.

### Beispiel A11

370 Gew.-Teile des nach Beispiel A7 erhaltenen cyanatocarbodiimids werden bei 100°C mit 284,5 Gew.-Teilen 1,4-Butandiol umgesetzt. Nach 1 Stunde ist das Gemisch isocyanatfrei. Das resultierende Produkt hat einen Hydroxylgruppengehalt von 15,6 %.

### B) Herstellung und Prüfung der stabilisierten Polyurethane

### Vergleichsbeispiel B1

250 Gew.-Teile eines wasserfreien Polybutandioladipats mit einem Durchschnittsmolekulargewicht von 2000 (OH-Zahl 56 mg KOH/g, Säurezahl 0,7 mg KOH/g), 22,4 Gew.-Teile Butandiol-(1,4), 2,5 Gew.-Teile des Produkts aus Beispiel A1 und 1,5 Gew.-Teile Ethylenbisstearylamid werden bei 80°C gemischt. Anschließend werden 98 Gew.-Teile Diphenylmethan-(4,4')-diisocyanat zugegeben und 30 sec kräftig gerührt. Die reagierende Masse wird in eine Teflonschale gegeben und 2 h bei 120°C und danach 15 h bei 70°C gehalten. Das abgekühlte Produkt wird granuliert und durch Spritzguß zu Prüfstäben (S 1 Stäbe nach DIN) verarbeitet. Die Prüfstäbe werden bei 80°C in Wasser gelagert und in Abständen von 1 Woche, bei längeren Lagerzeiten in Abständen von 2 Wochen je 3-5 Prüfstäbe getrocknet und die Zugfestigkeit bestimmt (Zusammensetzung und Ergebnisse siehe Tabellen 2 und 3).

### Beispiele B2 bis B24

Die Produkte werden wie im Vergleichsbeispiel B1 beschrieben hergestellt. Die Zusammensetzungen und mögliche Verfahrensabweichungen sind Tabelle 2 und den zugehörigen Fußnoten zu entnehmen.

Die Zugfestigkeiten nach unterschiedlicher Alterung in Wasser bei 80°C sind in Tabelle 3 zusammengestellt.

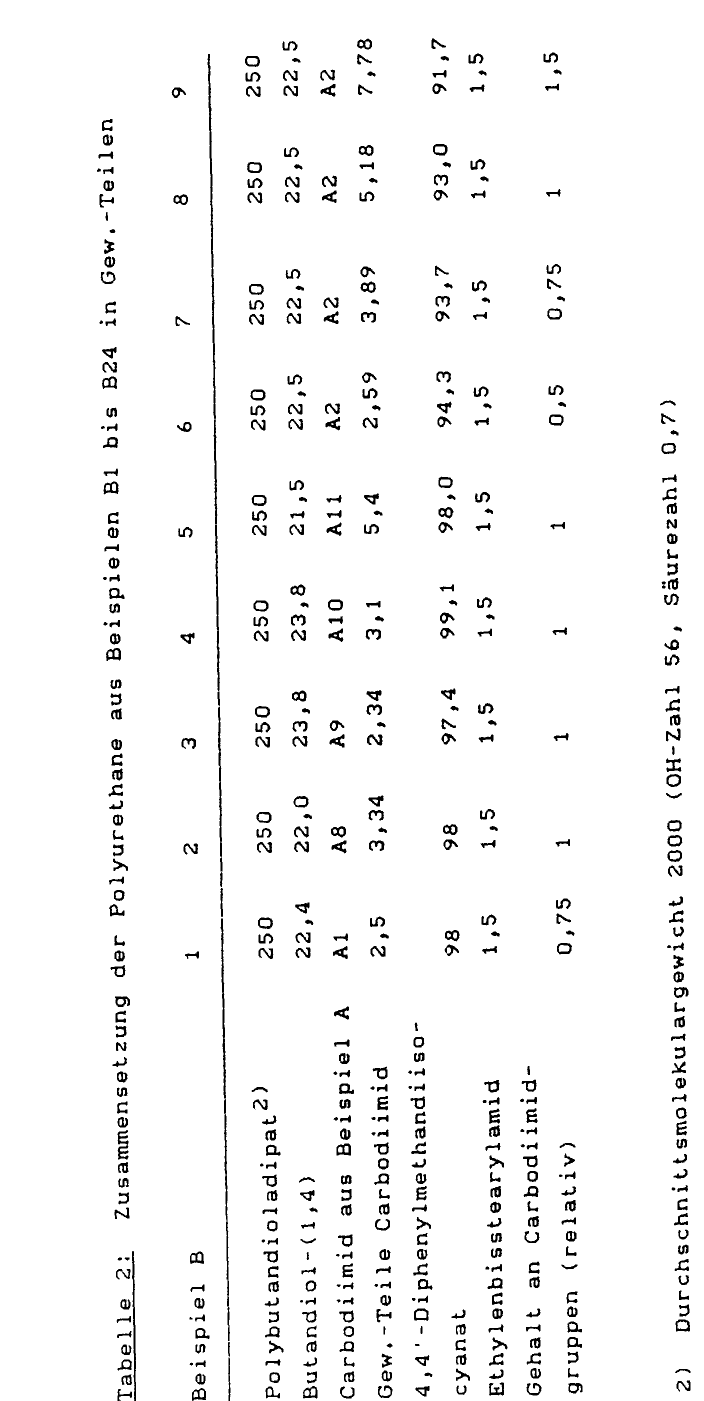

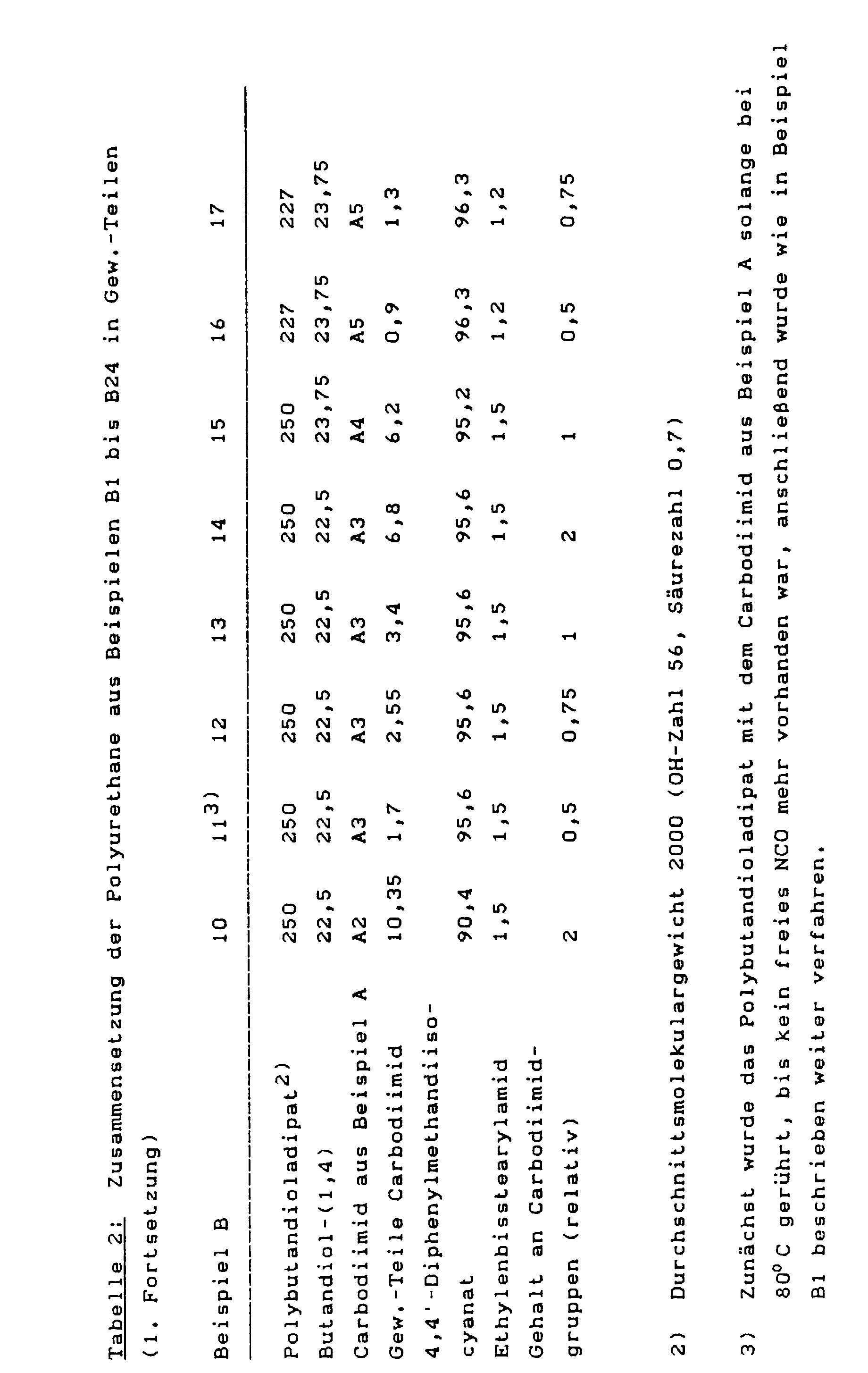

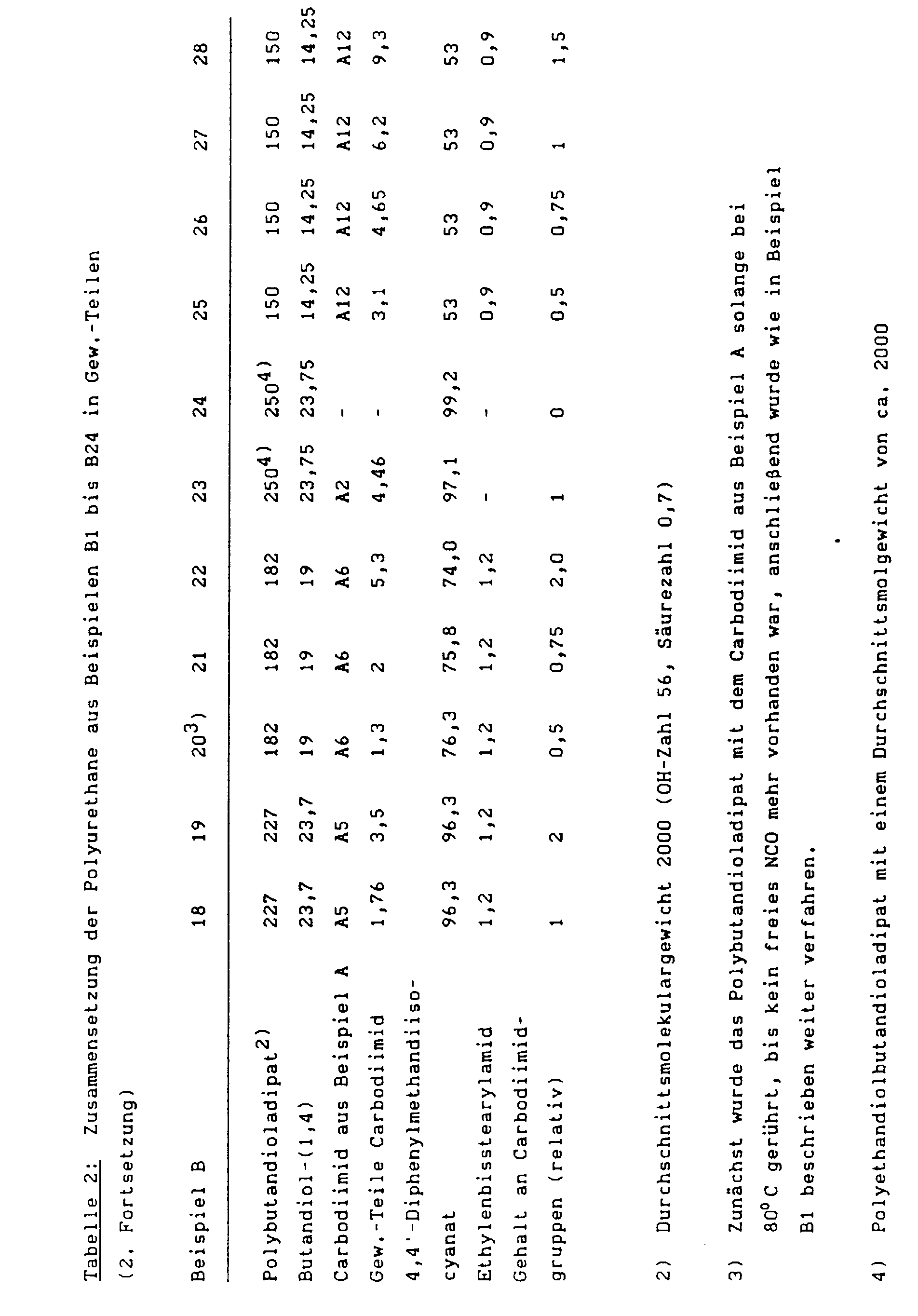

**Tabelle 3:**

| Zugfestigkeiten nach Lagerung im 80°C warmen destillierten Wasser | | | | | | |
|---|---|---|---|---|---|---|
| Nr./Zugfestigkeit (MPa) n.Lagerung | Tage | | | | | |
| | 0 | 7 | 14 | 21 | 28 | 42 |
| B1 | 57,4 | 34,8 | 8,1 | z | z | z |
| B2 | 53,9 | 38,1 | 11,8 | z | z | z |
| B3 | 50,9 | 44,8 | 33,5 | 21,1 | 2,8 | z |
| B4 | 50,7 | 53,0 | 52,6 | | 21,6 | z |
| B5 | 40,5 | 36,7 | 28,1 | 11,1 | 1,6 | z |
| B6 | 35,0 | 31,2 | 28,4 | 26,6 | 16,4 | 2,3 |
| B7 | 33,3 | 32,8 | 32,1 | 32,4 | 29,8 | 16,5 |
| B8 | 33,6 | 35,1 | 34,7 | 34,5 | 33,2 | 30,6 |
| B9 | 28,4 | 28,0 | 29,3 | 30,8 | 28,0 | 30,1 |
| B10 | 24,4 | 26,6 | 27,7 | 26,6 | 27,8 | 28,4 |
| B11 | 30,6 | 28,8 | 22,6 | 9,5 | 3,5 | z |
| B12 | 38,5 | 34,3 | 24,8 | 14,5 | 3,9 | z |
| B13 | 35,7 | 34,8 | 37,1 | 33,4 | 29,8 | 10,5 |
| B14 | 36,6 | 33,4 | 33,2 | 30,8 | 35,2 | 18,4 |
| B15 | 39,1 | 36,4 | 26,2 | 16,0 | 3,8 | z |
| B16 | 40,6 | 36,7 | 27,0 | 10,9 | 3,5 | z |
| B17 | 43,8 | 38,3 | 36,8 | 38,8 | 34,3 | 2,9 |
| B18 | 41,8 | 34,9 | 37,1 | 36,6 | 34,7 | 2,5 |
| B19 | 42,8 | 35,1 | 37,0 | 37,7 | 33,4 | 5,6 |
| B20 | 43,6 | 38,3 | 35,3 | 34,2 | 35,4 | 10,5 |
| B21 | 40,5 | 37,0 | 33,8 | 35,6 | 36,9 | 10,0 |
| B22 | 39,3 | 33,2 | 33,8 | 34,4 | 32,5 | 13,0 |
| B23 | 24,8 | 16,9 | 16,5 | 13,3 | 5,7 | 3,2 |
| B24 | 30,2 | 8,8 | 2,6 | z | | |
| B25 | 35,2 | 29,9 | 35,0 | 33,5 | 38,8 | 12,3 |
| B26 | 38,9 | 32,9 | 37,7 | 36,5 | 30,7 | 4,5 |
| B27 | 41,5 | 36,8 | 25,2 | 29,9 | 25,2 | 2,5 |
| B28 | 35,0 | 26,4 | 30,1 | 31,8 | 38,9 | 21,9 |

### Beispiel 29

A. Unstabilisiertes Polybutylenterephthalat wird in einem Meßextruder (L:D = 25, Kompression kontinuierlich steigend, Kompressionsverhältnis 1:3) extrudiert.
B. Man verfährt wie in Beispiel 29A beschrieben, trommelt jedoch vor der Extrusion 1 Gew.-% des in Beispiel A2 beschriebenen Produktes auf das Polybutylenterephthalat. Die Produkte aus den Beispielen 25A und B werden 13 Stunden bei 100°C in destilliertem Wasser gelagert und anschließend getrocknet. Bei 250°C wird in einem kapillarviskosimeter Typ HKV 2000 (Hersteller Fa. Göttfert) nach Verweilzeiten von 5, 10, 15 und 20 Minuten bei einem Druck von 2,45 bar (Düse 15 mm lang und 1 mm Durchmesser) der Schmelzindex bestimmt, auf eine Verweilzeit 0 extrapoliert und dabei der Intrinsic Melt Index (IMI) ermittelt.

| Produkt aus | IMI (g/10 min.) |
|---|---|
| Beispiel 29A unbehandelt | 54 |
| Beispiel 29A 13 h bei 100°C (i. Wasser) | 76 |
| Beispiel 29B unbehandelt | 13 |
| Beispiel 29B 13 h bei 100°C (i. Wasser) | 15 |

Die Bestimmung der Intrinsic Melt Indices ergibt, daß das erfindungsgemäß behandelte Produkt in seinem Molekulargewicht (Intrinsic Melt Index) durch den Wassereinfluß im Unterschied zum unbehandelten praktisch nicht verändert wurde.

### Beispiel 30

### Standard-Gieß-Polyurethan ohne Hydrolysenschutzmittel (Vergleich)

Ein Polyester aus Adipinsäure und Ethylenglykol (100 Gew.-Teile) mit einem mittleren Molekulargewicht von 2000 und einer OH-Zahl von 56 wird bei 130°C unter einem Vakuum von ca. 40 mm eine Stunde lang entwässert und anschließend bei ca. 125°C gehalten (Größenordnung des Ansatzes: ca. 500 g Polyester). Dann gibt man unter Rühren 18 Gew.-Teile 1,5-Diisocyanatonaphthalin zu. Nach ca. 2 Minuten wird ein Vakuum von ca. 40 mm angelegt. Nach Beendigung der exothermen Reaktion (nach ca. 15 Minuten) werden unter starkem Rühren 2 Gew.-Teile Butandiol-1,4 zugegeben. Es wird ca. 30 Sekunden vernetzt und in eine auf 100°C vorgeheizte Form gegossen. Die Mischung ist ca. 150 Sekunden gießfähig und ist nach ca. 20 Minuten entformbar.

Das Elastomer wird noch 24 Stunden bei 110°C getempert. Danach hat es die in Tabelle 4 (siehe Beispiel 30) angegebenen Eigenschaften.

Nach einer Lagerung in Wasser bei 80°C (Lagerkörper Normstab S1 gemäß DIN 53 504) wird die Zugfestigkeit nach 10 Tagen erneut gemessen (siehe Tabelle 5).

### Beispiele 31 bis 35

### Erfindungsgemäße Verwendung als Hydrolyseschutzmittel in Polyurethanelsatomeren

Wie in Beispiel 30 wird das NCO-Prepolymer hergestellt. Nach Beendigung der exothermen Reaktion werden in das NCO-Prepolymer verschiedene Mengen an Carbodiimiddiisocyanat aus Beispiel A2 zugegeben (siehe Tabelle 6, Beispiele 31 bis 35) und etwa 15 Minuten lang eingerührt, Anschließend werden unter starkem Rühren 2 Gew.-Teile Butandiol-(1,4) zudosiert und wie im vorangegangenen Beispiel verarbeitet. Mit zunehmender Menge des Carbodiimiddiisocyanats aus Beispiel A2 fallen die Shorehärte und der Modul bei 100 % Dehnung etwas ab; diese Werte sind bei 1,5 und 2 Gew.-Teilen Carbodiimidanteil aber noch akzeptabel. Das Rückstellverhalten (DVR) wird hingegen bei 1,2 bis 2,2 Gew.-Teilen Carbodiimidanteil günstig beeinflußt.

Die stabilisierende Wirkung dieses Carbodiimids zeigt sich an den Zugfestigkeitswerten nach 10 Tagen Wasserlagerung (siehe Tabelle 5). Die optimal wirksame Menge dieses Carbodiimids beträgt etwa 1,5 bis 2 Gew.-Teile bezogen auf 100 Gew.-Teile Polyester (siehe Tabelle 5).

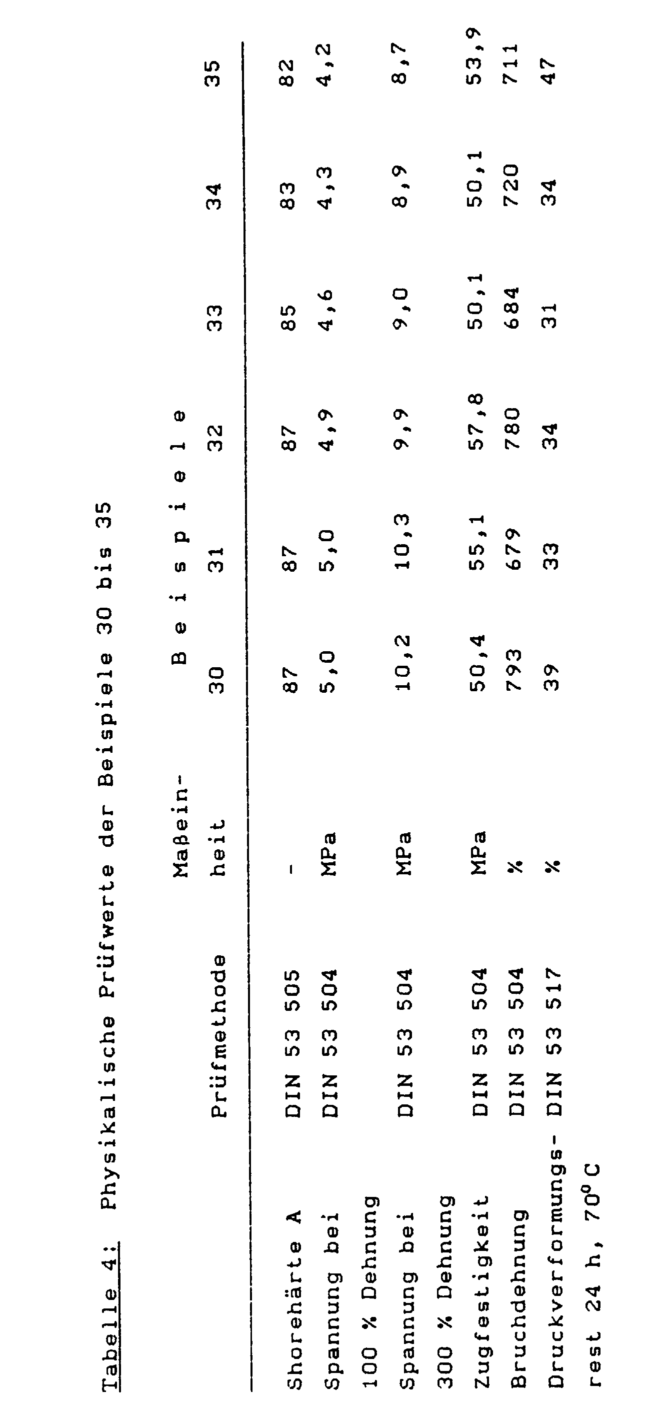

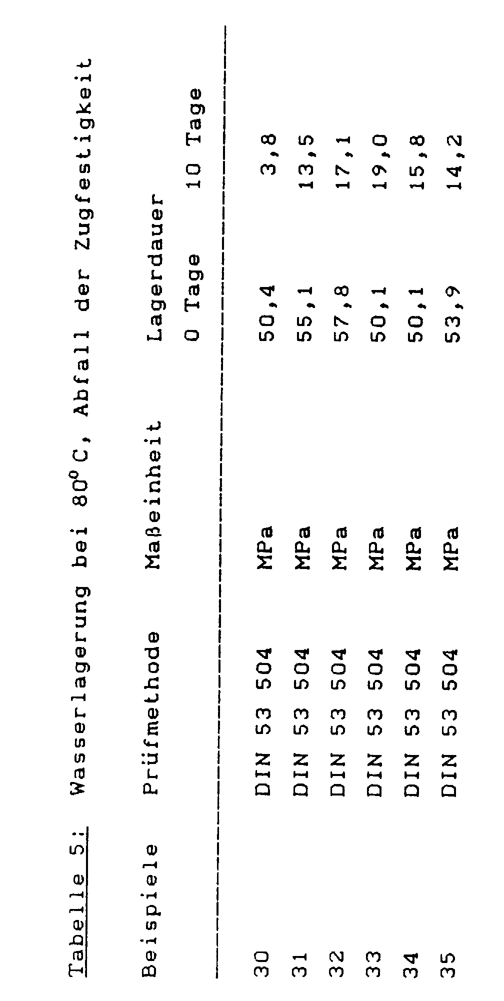

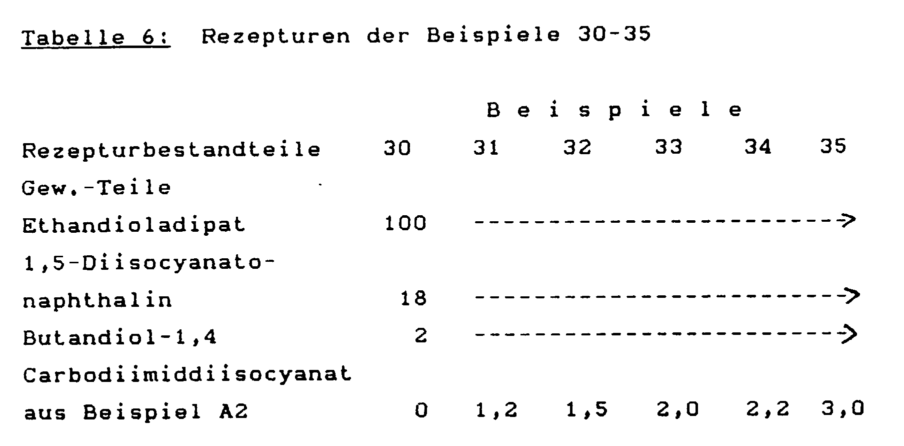

Wie Aus Tabelle 2 und 5 zu ersehen, zeigen die Isocyanatgruppen enthaltenden Carbodiimide eine hervorragende Alterungsschutzwirkung, die der der diolendgruppen enthaltenden Carbodiimide wie der der Carbodiimide ohne weitere reaktive Gruppen noch überlegen ist. Besonders gut ist die Alterungsschutzwirkung, wenn das Isocyanatgruppen enthaltende Carbodiimid nur im Mittel eine Carbodiimidgruppe je Molekül enthält und wenn ein Substituent am aromatischen Ring in Nachbarschaft zur Carbodiimidgruppe verzweigt ist.

## Patentansprüche

1. Verfahren zur Stabilisierung von Estergruppen enthaltenden Kunststoffen gegen Wärme- und/oder hydrolytischen Abbau mit einbaufähigen, sterisch gehinderten Carbodiimiden der allgemeinen Formel 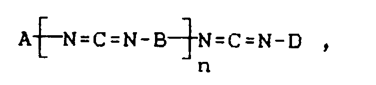 in der A, B und D aromatische oder araliphatische Kohlenwasserstoffreste mit 6 bis 20 C-Atomen bedeuten, die in mindestens einer Nachbarstellung zur Carbodiimidgruppe aromatische, aliphatische und/oder cycloaliphatische Substituenten mit mindestens 2 C-Atomen tragen, und die Carbodiimidgruppe(n) an aromatischen Kohlenstoff gebunden ist (sind), dadurch gekennzeichnet, daß im Mittel n = 0-3 ist und A und D gleich oder verschieden und durch mindestens eine NCO-Gruppe substituiert sind.

2. Verfahren gemäß Anspruch 1, dadurch gekennzeichnet, daß der (die) aromatische(n) Ring(e) in beiden Nachbarstellungen zur Carbodiimidgruppe substituiert ist (sind), wobei ein Substituent auch eine Methylgruppe sein kann.

3. Verfahren gemäß Ansprüchen 1 bis 2, dadurch gekennzeichnet, daß das erfindungsgemäß zu verwendende Isocyanatgruppen enthaltende Carbodiimid aus Diethyltoluylendiisocyanat erhalten wurde.

4. Verfahren gemäß Ansprüchen 1 und 2, dadurch gekennzeichnet, daß mindestens einer der Substituenten am aromatischen Ring in Nachbarstellung zur Carbodiimidgruppe ein verzweigter aliphatischer Rest mit mindestens 3 Kohlenstoffatomen ist.

5. Verfahren gemäß Ansprüchen 1 bis 2 und 4, dadurch gekennzeichnet, daß das erfindungsgemäß zu verwendende Carbodiimid aus Triisopropylphenylendiisocyanat hergestellt ist.

6. Verfahren gemäß Ansprüchen 1, 2, 4, 5, dadurch gekennzeichnet, daß das erfindungsgemäß zu verwendende Carbodiimid aus Triisopropyl-m-phenylendiisocyanat hergestellt ist.

7. Verfahren gemäß Ansprüchen 1 bis 6, dadurch gekennzeichnet, daß n im Mittel <2, bevorzugt 0 ist.

8. Verfahren nach Ansprüchen 1 bis 7, dadurch gekennzeichnet, daß der Gehalt an sterisch gehindertem, Isocyanatgruppen enthaltendem Carbodiimid 0,2 bis 8 Gew.-% beträgt.

9. Verfahren gemäß Ansprüchen 1 bis 8, dadurch gekennzeichnet, daß der erfindungsgemäß zu stabilisierende Estergruppen enthaltende Kunststoff ein Polyesterpolyurethan (darunter sind auch ein Polyesterurethanharnstoff und Polyesterpolyharnstoff zu verstehen) ist.

10. Verfahren gemäß Ansprüchen 1 bis 9, dadurch gekennzeichnet, daß der erfindungsgemäß zu stabilisierende Kunststoff ein Polyterephthalat ist.

## Claims

1. Process for the stabilisation against heat and/or hydrolytic degradation of plastics materials containing ester groups, using sterically hindered carbodiimides which are capable of being incorporated and correspond to the general formula 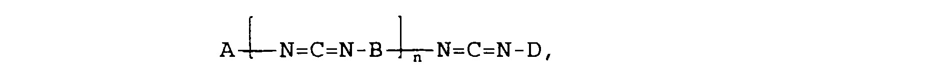 wherein A, B and D denote aromatic or araliphatic hydrocarbon groups having 6 to 20 C atoms, which in at least one position adjacent to the carbodiimide group carry aromatic, aliphatic and/or cycloaliphatic substituents having at least 2 C atoms, and the carbodiimide group(s) is/are bonded to aromatic carbon, characterised in that on average n equals 0 to 3 and A and D are identical or different and are substituted by at least one NCO group.

2. The process according to claim 1, characterised in that the aromatic ring(s) in both positions adjacent to the carbodiimide group is/are substituted, a possible substituent also being a methyl group.

3. The process according to claims 1 or 2, characterised in that the carbodiimide containing isocyanate groups to be used according to the invention was obtained from diethyltolylene diisocyanate.

4. The process according to claims 1 or 2, characterised in that at least one of the substituents on the aromatic ring in the position adjacent to the carbodiimide group is a branched aliphatic group having at least 3 carbon atoms.

5. The process according to claims 1, 2 or 4, characterised in that the carbodiimide to be used according to the invention is prepared from triisopropylphenylene diisocyanate.

6. The process according to claims 1, 2, 4, 5, characterised in that the carbodiimide to be used according to the invention is prepared from triisopropyl-m-phenylene diisocyanate.

7. The process according to claims 1 to 6, characterised in that n is on average <2, preferably 0.

8. The process according to claims 1 to 7, characterised in that the content of sterically hindered carbodiimide containing isocyanate groups is from 0.2 to 8 wt.%.

9. The process according to claims 1 to 8, characterised in that the plastics material containing ester groups, which is to be stabilised according to the invention, is a polyester polyurethane (by this is also meant a polyester urethane urea and polyester polyurea).

10. The process according to claims 1 to 9, characterised in that the plastics material to be stabilised according to the invention is a polyterephthalate.

## Revendications

1. Procédé pour stabiliser dcs résines synthétiqucs contenant des groupes esters contre les dégradations provoquées par la chaleur ct/ou par l'hydrolyse à l'aide de carbodiimidcs faisant l'objet d'un empêchcment stérique et qui sont aptes à la combinaison chimique, répondant à la formule générale 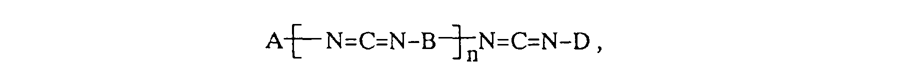 dans laquelle A, B et D représentent des radicaux hydrocarbonés aromatiques ou araliphatiques en C₆-C₂₀ qui portent, dans au moins une position ortho du groupe carbodiimide, des substituants aromatiques, aliphatiques et/ou cycloaliphatiques à au moins deux atomes de carbone, et le ou les groupes carbodiimides sont fixés sur des carbones aromatiques, caractérisé en ce que, en moyenne n = 0 à 3, et A et D, identiques ou différents, sont substitués par au moins un groupe NCO.

2. Procédé selon revendication 1, caractérisé en ce que le ou les cycles aromatiques sont substitués dans les deux positions voisines du groupe carbodiimide, l'un des substituants pouvant consister en un groupe méthyle.

3. Procédé selon les revendications 1 à 2, caractérisé en ce que le carbodiimide à groupes isocyanates à utiliser conformément à l'invention a été obtenu à partir du diéthyltoluylènediisocyanate.

4. Procédé selon les revendications 1 et 2, caractérisé en ce qu'au moins un des substituants du cycle aromatique en position voisine du groupe carbodiimide est un radical aliphatique ramifié à au moins 3 atomes de carbone.

5. Procédé selon les revendications 1 à 2 et 4, caractérisé en ce que le carbodiimide à utiliser conformément à l'invention a été préparé à partir du triisopropylphénylènediisocyanate.

6. Procédé selon les revendications 1, 2, 4, 5, caractérisé en ce que le carbodiimide à utiliser conformément à l'invention a été préparé à partir du triisopropyl-m-phénylènediisocyanate.

7. Procédé selon les revendications 1 à 6, caractérisé en ce que, en moyenne, n est inférieur à 2 et de préférence égal à 0.

8. Procédé selon les revendications 1 à 7, caractérisé en ce que la teneur en carbodiimide à groupes isocyanates objet d'un empêchement stérique est de 0,2 à 8 % en poids.

9. Procédé selon les revendications 1 à 8, caractérisé en ce que la résine synthétique à groupes esters à stabiliser conformément à l'invention est un polyesterpolyuréthanne (incluant une polyesteruréthanneurée et une polyesterpolyurée).

10. Procédé selon les revendications 1 à 9, caractérisé en ce que la résine synthétique à stabiliser conformément à l'invention est un polytéréphtalate.
